# EUROPEAN PATENT SPECIFICATION

(11) **EP 0 751 286 B1**
(45) Date of publication and mention of the grant of the patent: **20.10.1999**
(21) Application number: 96109885.2
(22) Date of filing: 19.06.1996
(51) Int. Cl.: F02B 31/08

(54) **Internal combustion engine having a fuel supply apparatus**
Brennkraftmaschine mit einer Kraftstoffzufuhreinrichtung
Moteur à combustion interne avec dispositif d'alimentation en carburant

(30) Priority: 26.06.1995 JP 18339095
(43) Date of publication of application: 02.01.1997
(73) Proprietor: YAMAHA HATSUDOKI KABUSHIKI KAISHA, Iwata-shi Shizuoka-ken, 438 (JP)
(72) Inventor: Sakurai, Kenichi, Iwata-shi, Shizuoka-ken (JP); Kawamura, Makoto, Iwata-shi, Shizuoka-ken (JP)
(74) Representative: Grünecker, Kinkeldey, Stockmair & Schwanhäusser Anwaltssozietät

(56) References cited:
- EP-A- 0 390 589
- DE-A- 4 108 469
- DE-A- 4 233 640
- DE-A- 4 439 918
- US-A- 4 550 699
- US-A- 4 726 341
- US-A- 5 329 912

## Description

The present invention relates to an internal combustion engine having a center opening into a combustion chamber and side openings into said combustion chamber, an air intake passage extending towards said openings, said air intake passage comprising a common main air intake passage unit spaced apart from said openings and a fuel injection valve which is mounted to inject fuel into the air intake passage.

In an SI-engine known to the applicant, during low speed/low load operations (including mid-speed/mid-load operations with the same definition applying hereinafter) only little fuel is injected so that an average air/fuel ratio (A/F) of the mixture is high. Under these conditions of operation, stratified combustion is used in order to stabilize combustion and improve engine functioning. In order to assure ignition in the combustion chamber, a rich air/fuel mixture is created in the area close to the discharge area of a spark plug, whereas a leaner air/fuel mixture is created in the surrounding areas. This stratification can be accomplished for example by generating a swirl or tumbling flow of the air/fuel mixture in a combustion chamber by employing specific shapes for the openings of the air intake passage into the combustion chamber.

However, when the openings of the air intake passages evince special shapes for generating said swirl or tumbling flow, under low speed/low load operations this will adversely affect the engine performance especially during high speed/high low operation. This is because under a high speed/high load, a high volume of air flows through the intake passages. Accordingly, the resistance to flow (pressure loss) increases dramatically, inhibiting the improvement of engine functioning.

An internal combustion engine comprising the features of the preamble of claim 1 is known from US-A-5 329 912 which relates to a multi-valve engine having on its intake side a center opening and side openings into a combustion chamber. In this prior art engine, a fuel spray is mechanically deflected by a slidably supported rod in order to spray fuel either to a central intake opening or to side intake openings in order to provide an even mixture distribution. When this engine is operated at low and mid range conditions, fuel is sprayed to the central opening only. In any case, a stoichiometric fuel air mixture is supplied to the engine under all running conditions in order to provide a substantially homogeneous mixture.

If the engine according to US-A-5 329 912 were run on a leaner air/fuel mixture in order to reduce the output of carbon-dioxide, this would cause improper ignition in particular under low engine speed conditions. Accordingly, the output in hydro-carbon would increase significantly resulting in poor fuel efficiency.

Another internal combustion engine comprising two intake valves is known from DE-A1-44 39 918. In this prior art engine, fuel sprayed from an injection nozzle is controlled by an air nozzle in order to spray fuel either through one or through both side intake valves. Because of the two intake valves, it is difficult to provide a rich mixture near the ignition point of a spark plug. Accordingly, additional air passages by-passing a throttle valve in a main air intake passage are required in order to deflect the sprayed fuel towards the center of the combustion chamber which renders the whole construction rather complicated.

Because of the two intake valve structure, the portion leading to the side intake valve has to have a curved shape so as to direct the fuel to the center of the combustion chamber. The curvature of this portion is likely to impair the flow conditions under high speed engine running conditions.

Another internal combustion engine having two intake valves is known from US-A-4 726 341. This prior art engine is provided with an air intake control valve for obtaining the effects described in connection with DE-A1-44 39 918.

Accordingly, the object of the present invention is to improve a multi-valve engine having three intake valves of the type as defined in the preamble portion of claim 1 which engine provides improved reliability of ignition without impairing the output torque under high engine speed.

This technical problem is solved by an internal combustion engine comprising the features of claim 1. By the air supply means it is possible to control the air/fuel mixture sprayed towards the valve openings and, in particular, to the center opening. The air/fuel supply means may be switched on or off. If the air supply is switched on, the fuel sprayed by the fuel injection valve can be controlled according to the pressure conditions in the intake passage. It is also possible to switch off the air supply if required.

Moreover, the flow conditions in the portion leading to the center opening can be controlled by an additional air intake control valve so that it is possible to more gradually control the flow conditions in the portion leading to the center opening than for example in US-A-5 329 912.

Accordingly, it is possible to provide stratification in the combustion chamber under low speed/low load operations, i.e. a rich mixture near the spark plug. Because of this, it is possible to run the engine over a wide range of air/fuel mixtures without changing the structure of the engine but merely adapting the control of the air/fuel spraying and the actuation of the air intake control valve.

More specifically, when the air supply means supplies air to the air intake passage, that air collides with the fuel injected by the fuel injection valve and directs the fuel toward the center opening. The fuel forms a rich air/fuel mixture, and moreover, its collision with the foregoing air promotes the formation of a mist which is directed toward the discharge area.

Accordingly, during low-speed, low-load operations, if air is supplied as described above from the air supply means, even in cases when there is a relatively high value for the average air/fuel ratio, stratification occurs in the combustion chamber to create a rich air/fuel mixture in the vicinity of the foregoing discharge area, while creating a lean air/fuel mixture strata in the surrounding areas, thereby generating the desired stratification to stabilize combustion and improve the functioning of the engine.

On the other hand, when the air supply from the air supply means is halted so that it no longer supplies air, then the fuel injected by the foregoing fuel injection valve is directed toward the side openings. The fuel that then flows through these side openings into the combustion chamber is broadly dispersed in the foregoing combustion chamber to create a more uniform air/fuel ratio throughout the combustion chamber.

Then, during high-speed, high-load operations, a large amount of fuel is being supplied to the combustion chamber, and the average air/fuel ratio is low. In this case, the more uniform air/fuel ratio throughout the combustion chamber serves to accelerate the combustion speed, such acceleration being necessary for the handling of the highspeed, high-load operations.

At this point, during high-speed, high-load operations, the air supply from the air supply means can be halted in order to cause the fuel injected by the fuel injection valve to be directed into the combustion chamber through the side openings, and to be dispersed throughout the combustion chamber to accelerate the combustion speed. In this case, as was described below, the low value of the air/fuel ratio assures reliable ignition by the spark plug. As a result, the engine performance is thereby improved during high-speed, high-load operations.

Thus , stratification is generated during low-speed, low-load operations to stabilize combustion and improve engine performance. Performance increases for the engine are also realized during high-speed, high-load operations.

According to an embodiment of the invention, a gap is formed at an outside perimeter area of the air intake control value on the air intake passage axis so that if this air intake control valve is closed during low-speed, low-load operating ranges, the air that passes between the inside wall and the gap in the air intake control valve directs the fuel that is injected into it toward the discharge area, thereby reliably generating the desired stratification to enhance the effects described above.

According to another embodiment of the invention, the passage axis of the main air intake unit and the passage axis of the branch passage connecting to the center opening are positioned approximately parallel to each other.

Accordingly, when viewed along the foregoing cylinder axis, the foregoing main air intake passage unit and the branch passage are approximately straight, inhibiting the generation of turbulence in the flow of fuel therein. Since the foregoing center opening directs this flow toward the discharge area of the spark plug, stratification is reliably generated.

Accordingly, especially during low-speed, low-load operation, a strata composed of a rich air/fuel mixture is created in the vicinity of the discharge area of the spark plug to improve the reliability of ignition with the result that the engine performance is improved even when it is operating in the low-speed, low-load operating range.

Further advantageous embodiments of the invention are contained in the subclaims.

A preferred embodiment of the invention will be described hereinafter in conjunction with the drawings, wherein:
Figure 1 shows a sectional top view,
Figure 2 shows a vertical sectional side view, and

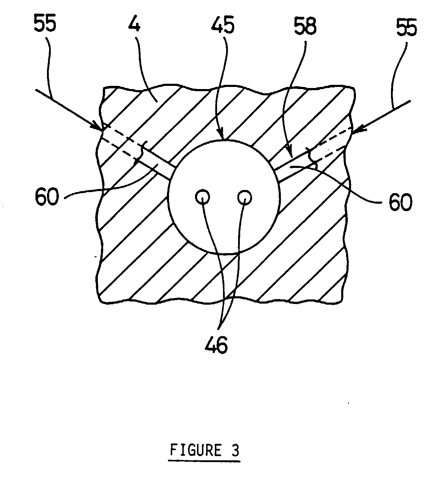

Figure 3 shows the nozzles of the fuel injection valve and the air supply.

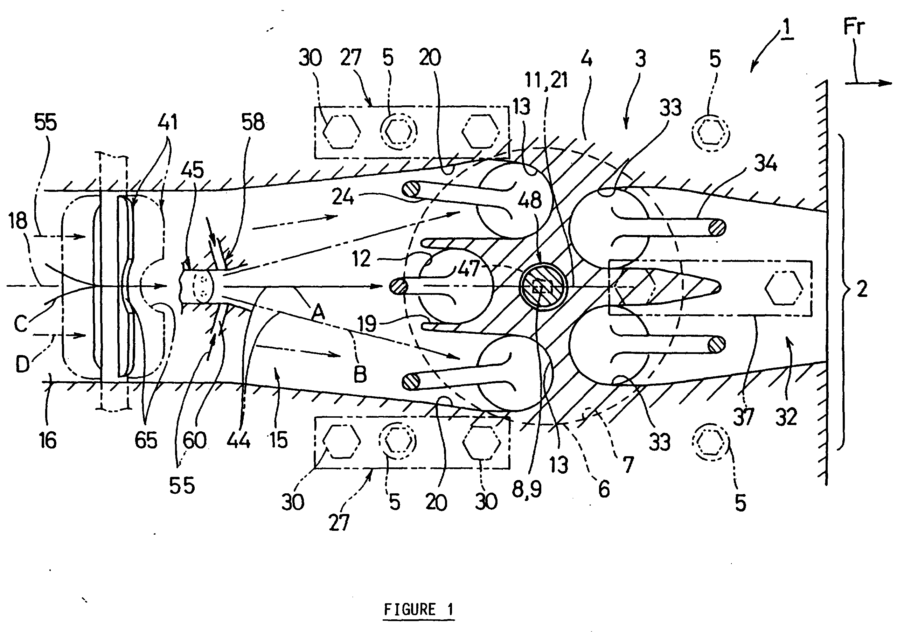

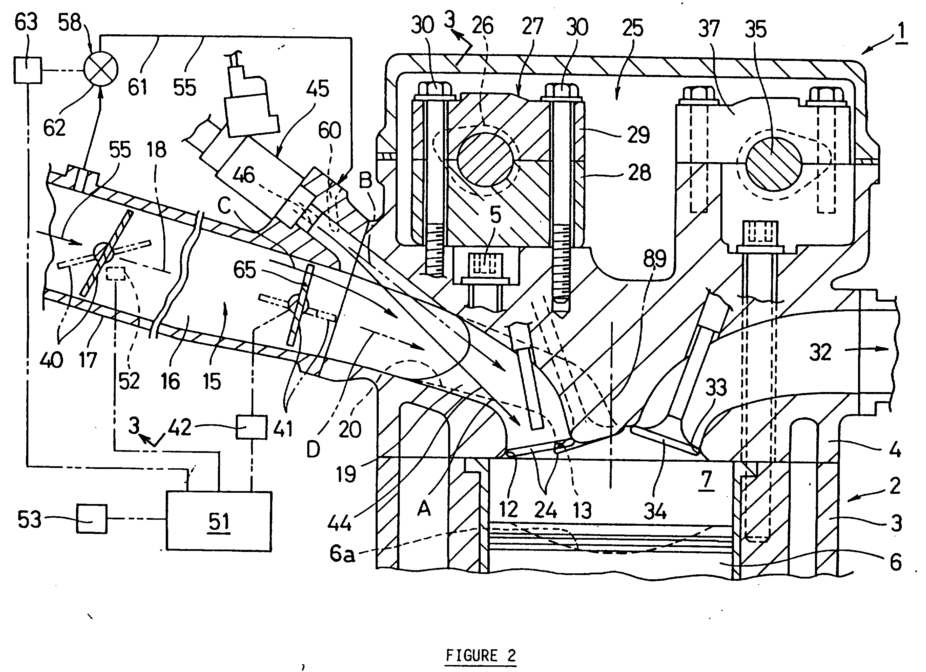

In Figures 1 and 2, reference number 1 indicates a four-cycle, in-line, multicylinder, internal combustion engine mounted in an automobile. To facilitate explanation, the arrow labeled Fr in the Figures points to the front, and references below to "left" and "right" shall be based on facing in that forward direction.

The foregoing internal combustion engine 1 is composed of a cylinder unit 3, a cylinder head 4, which is removably secured by bolt fasteners 5 to the top of the cylinder unit 2. The combustion chamber 7 is formed in the space inside the cylinder head 4 that is bounded by the foregoing cylinder unit 3, the cylinder head 4 and piston 6. In this case, the axis 8 of the foregoing cylinder 3 is coaxial with the axis of the piston 6 and the center 9 of the combustion chamber 7. There is further a spherical-section-shaped indented surface 6a formed in the crown surface of the foregoing piston 6 on the combustion chamber 7 side.

As is shown in Figure 1, when viewing along the axis 8 of the foregoing cylinder 2 (top view), an imaginary straight line 11 intersecting the foregoing axis 8 has been erected in the fore-aft direction. There is a center opening 12 formed in the cylinder head 4 of the cylinder 2 and it is an air intake port that opens from the outside of the foregoing cylinder 2 into the foregoing combustion chamber 7, and, when viewed along this imaginary straight line 11 (in the fore-aft direction), it has been shifted rearward with respect to the axis 8 of the foregoing cylinder 2. Further, on the left and right sides of the foregoing imaginary straight line 11, there are side openings 13, 13 formed in the cylinder head 4 of the same cylinder 2, which are air intake ports that open from the outside of the foregoing cylinder 2 into the same combustion chamber 7.

In this Figure 1, when the foregoing center opening 12 is taken as the reference point, then in the direction opposite from the axis 8 of the foregoing cylinder 2, in other words, rearward from the cylinder axis 8, there is an air intake passage 15 that extends to the foregoing combustion chamber 7. This air intake passage 15 has a main air intake passage unit 16 that is positioned at some distance from the foregoing combustion chamber 7, i.e. it is positioned rearward from this combustion chamber 7. This main air intake passage unit 16 is formed on the inside of the air intake pipe 17 that attaches to the foregoing cylinder head 4, and the passage axis 18 is approximately parallel to the foregoing imaginary straight line 11.

As shown in Figure 1, this same air intake passage 15 branches from the foregoing combustion chamber 7 side of the foregoing main air intake passage unit 16 into three branches 19, 20 which connect to each of the foregoing openings 12, 13; these branch passages 19, 20 are formed in the foregoing cylinder head 4. The passage axis 21 of the branch passage 19 that runs from the foregoing main air intake passage unit 16 to the center opening 12 is positioned to be approximately parallel and in close proximity to the foregoing imaginary straight line 11.

An air cleaner (not shown), which opens into the atmosphere, is connected to the opposite end from the foregoing combustion chamber 7 of the foregoing main air intake passage unit 16.

As shown in Figure 2, in a view wherein the axis 8 of the cylinder 2 is oriented vertically, the foregoing main air intake passage unit 16, as well as the various branch passages 19, 20 are shown to be approximately straight, sloping downward from their upstream side toward the combustion chamber 7, and further, on the lower ends of the branch passages 19, 20, there are downward, arc-shaped bends toward the same combustion chamber 7.

Shown in Figures 1 and 2 are air intake valves 24 that are installed to open and close the respective foregoing openings 12, 13. Spring force applied to the various air intake valves 24 causes them to normally close the foregoing openings 12, 13 from the combustion chamber 7 side. The valve rods of these air intake valves 24 gradually diverge as they extend upward.

Located above the foregoing air intake valves 24 is the air intake camshaft 26 of the dynamic valve mechanism 25. This air intake camshaft 26 is rotatably supported axially by a plurality of bearings 27 that extend left and right along its axis. The foregoing air intake camshaft 26 rotates in conjunction with the drive of the internal combustion engine 1, and the cam engagement by the foregoing air intake valves on this air intake camshaft 26 causes the appropriate opening of the valves.

The foregoing bearings 27 are composed of main bearing units 28 which support the foregoing air intake camshaft 26 from the bottom and of bearing cover units 29 which hold the foregoing air intake camshaft 26 down from above. The foregoing air intake camshaft 26 is supported by these bearing units 28 and bearing cover units 29, and because they are held together by fasteners 30, which are bolts, the camshaft 26 along with the cylinder head 4 are removable.

As shown in Figure 1, the foregoing openings 12, 13 are laid out compactly in the left-right direction with but a small space between adjacent openings 12, 13. Thus, the foregoing fasteners 5 and the bearings 27 are positioned between adjacent cylinders 2, 2 in a manner such that, when viewed from the top, they overlap.

In order to make the foregoing fasteners 5 removable, as described above, the bearings 27 can be removed from the cylinder head 4 by loosening the fasteners 30.

An exhaust passage 32 is formed in the front of the foregoing cylinder head 4. As shown in Figure 1, this exhaust passage 32, when viewed from the top, extends in a direction opposite from the combustion chamber 7 side. The upstream end of the foregoing exhaust passage 32 communicates through independent left and right exhaust ports 33, 33 that open into the foregoing combustion chamber 7, and these exhaust ports are positioned on the left and right sides of the foregoing imaginary straight line 11.

Exhaust valves 34 are installed to open and close the foregoing exhaust ports 33. Spring forces is exerted on these exhaust valves to keep the foregoing exhaust ports 33, 33 normally closed on the combustion chamber side.

The exhaust camshaft 35 of the foregoing dynamic valve mechanism 25 is mounted above the foregoing exhaust valves 34. This exhaust camshaft 35 is rotatably supported by a plurality of bearings 37 that extend left and right along its axis. The foregoing exhaust camshaft 35 rotates in conjunction with the drive of the internal combustion engine 1, and the cam engagement of the foregoing exhaust valves 34 with the exhaust camshaft causes them to be opened appropriately. In the above described case, the bearings 37 are positioned between the left and right exhaust ports in a manner to avoid any overlap with the fasteners 5 when viewed from the top.

A throttle valve 40 is installed to open and close the main air intake passage unit 16 of the foregoing air intake passage 15. Also, on the downstream side of this throttle valve 40 is an air intake control valve 41 which opens and closes the same main air intake passage unit 16. This air intake control valve 41 is of the butterfly type, and it is equipped with an actuator 42 composed of a servo motor, etc., that can rotate the air intake control valve 41.

As shown in Figures 1 and 2, a fuel injection valve 45 is installed to inject fuel 44 into the foregoing air intake passage 15. There is a nozzle 46 on this fuel injection valve 45, and this nozzle 46 injects the fuel 44 further downstream of the air intake control valve toward the branches 19, 20 of the foregoing air intake passage 15. Further, the discharge area 47 of a spark plug 48 is mounted at the edge of the foregoing combustion chamber 7 near the axis 8 of the foregoing cylinder 2.

Shown in Figure 2 is the engine control unit 51 that electronically controls the foregoing internal combustion engine 1. This engine control unit 51 is electronically connected with the foregoing actuator 42, the fuel injection valve 45, the spark plug 48, the throttle aperture detection sensor 52 that detects the aperture of the throttle valve 40, and an RPM detection sensor 53 that detects the RPM of the internal combustion engine 1.

The foregoing engine control unit 51 opens the fuel injection valve 45 to cause injection of fuel 44 over the required interval of time, causing the generation of an air/fuel mixture composed of this fuel 44 and the foregoing air 55. After this mixture has been drawn into the foregoing combustion chamber 7, the rise of the piston 6 in the compression stroke compresses it. At this time, the spark plug 48 is fired under control of the engine control unit 51, causing the mixture to burn, thereby providing output from the internal combustion engine 1.

There is an air supply means 58 outside the air intake passage 15 which supplies air 55 into the air intake passage 15. This air supply means 58 has an air nozzle 60 which opens near the nozzle 46. There is an air passage 61 connected to the air intake passage 15 which is located further upstream of the throttle valve 40. There is a valve 62 that can open and close this air passage 61 that is operated by the actuator 63 of a solenoid, etc. This actuator 63 is electrically connected to the engine control unit 51.

When the foregoing valve 62 is open, there is negative pressure in the branch passage 19, 20, and the air 55 in the air intake passage on the upstream side of the throttle valve 40 passes through the foregoing air passage 61 and air nozzle 60 and is supplied to the branch passages 19, 20. At this time, fuel 44 injected by the foregoing fuel injection valve 45 collides with the foregoing air 55, thereby causing this fuel 44 to be directed through the foregoing branch passage 19 toward the foregoing center opening 12 (solid line A in the figures). The collision between the fuel 44 and the air 55 also promotes the generation of an air 55 mist.

On the other hand, when the foregoing valve 62 is closed, or when the negative pressure in the branch passages 19, 20 is low, the supply of air 55 through the air passage 61 and air nozzle 60 to the branch passages 19, 20 is halted. When no air 55 is being supplied, the fuel 44 injected by the foregoing fuel injection valve 45 passes through the foregoing branch passages 20, 20, and is directed at least toward the side openings 13, 13 in the set of openings composed of the foregoing center opening 12 and side openings 13, 13 (see double-dash lines B).

As shown in Figures 1 and 2, there is a partial spaced area 65 formed in the outside perimeter area of the foregoing air intake control valve 41. This gap 65 is positioned on the passage axis 18. As shown by the solid lines in Figures 1 and 2 and by the arrow C, when the foregoing air intake control valve 41 is closed, the air 55 that passes through the gap 65 of the foregoing air intake control valve 41 directs the fuel 44 injected by the foregoing fuel injection valve 45 through the foregoing branch passage 19 toward the center opening 12.

As shown by the double-dash lines in Figures 1 and 2 and by the arrow D, when the foregoing air intake control valve 41 is open, the air 55 passing through the air intake passage 15 is prevented from exerting any great effect on the fuel 44 that is injected by the foregoing fuel injection valve 45. At this time, the fuel 44 passes through the foregoing branch passages 20, 20 toward at least the side openings 13, 13 of the set of openings of the foregoing center opening 12 and side openings 13, 13.

Explanation will now be provided with regard to the air supply means and the air intake control valve 41 when the foregoing internal combustion engine 1 is operating.

When, after receiving detection signal input from the foregoing throttle aperture detection sensor 52 and the RPM detection sensor 53, the engine control unit 51 determines that the internal combustion engine 1 is operating in the low-speed, low load operating range, it operates the actuator 63 to open the valve 62, thereby causing the air 55 to pass through the air nozzle 60 into the air intake passage 15. Further, the actuator 42 is operated to close the air intake control valve 41.

Upon this occurrence the air 55 supplied to the air intake passage 15 collides with the fuel 44 injected by the fuel injection valve 45, causing the fuel 44 to be directed toward the center opening 12 (see the solid line A in the Figures). In addition, the air 55 that flows through between the gap 65 in the air intake control valve 41 and the inside surface of the air intake passage 15 also guides the foregoing fuel 44 toward the center opening 12 (see the solid line A in the figures).

Then, when the foregoing fuel 44 passes through the foregoing center opening 12 into the combustion chamber 7, since the foregoing air intake passage 15 is positioned on the side of the foregoing center opening 12 that is opposite from the axis 8 of the cylinder 2, and since the discharge area 47 of the spark plug 48 is positioned near the axis 8 of the foregoing cylinder 2, a rich air/fuel mixture flows into the combustion chamber 7 through the foregoing center opening 12, toward the discharge area 47 and moreover, the collision of the fuel 44 with the foregoing air 55 promotes mist formation.

Moreover, the fuel, flowing downward into the combustion chamber through the foregoing center opening 12 is smoothly guided into the cupped surface 6a in the crown of the piston, which is near its top dead point, the fuel thereby being redirected upward (in a so-called tumbling flow), toward the foregoing discharge area 47.

Accordingly, even in cases where the average value of the air/fuel ratio is high during low-speed, low-load operations, if the above described air supply means 58 supplies air 55, a rich air fuel mixture is formed in the vicinity of the foregoing discharge area 47 in the combustion area, while on the other hand, in the outlying layer, there is a lean mixture, thereby generating the desired stratification.

On the other hand, when the engine control unit 51 makes the determination that the engine is operating in the high-speed, high-load range, the supply of air 55 by the foregoing air supply means 58 is halted. Further, the foregoing air intake control valve 41 is opened. Upon this occurrence, as described above, the fuel 44 injected by the fuel injection valve 45 and dispersed to flow through the side openings 13, 13 into the combustion chamber 7 and is dispersed to create an approximately uniform air/fuel ratio value throughout the combustion chamber 7. Thereby the combustion speed is increased. Also, as described above, since the value for the air/fuel ratio is low, there is reliable ignition by the sparkplug.

In the above described case, it would also be possible to direct the fuel 44 toward the center opening 12 as well as to the side openings 13, 13, thereby enabling the value of the air/fuel ratio in the various areas of the combustion chamber 7 to be even more uniform, to further speed combustion an maintain high speed operations.

Also, as was described above, the passage axis 18 of the main air intake passage unit 16, as well as the passage axis 21 of the branch passage 19 that connects the foregoing main air intake passage unit 16 to the center opening 12 are positioned to be approximately parallel to and close to the imaginary straight line 11.

As a result, when viewed along the axis 8 of the foregoing cylinder 2, the foregoing main air intake passage unit 16 and the branch passage 19 are aligned approximately straight, and this feature inhibits turbulence in the flow of fuel 44 through the foregoing main air intake passage unit 16 and the branch passage 19 as it is directed through the foregoing center opening 12 toward the discharge area 47 of the spark plug 48, thereby reliably generating the desired stratification.

Accordingly, especially during low-RPM, low-load operations, a rich air fuel mixture strata is formed near the discharge area 47 of the spark plug, thereby making ignition more reliable.

It would also be possible to locate the gap 65 to the left or right side of the passage core so that when the air intake control valve 41 is closed, the air 55 passing through the foregoing gap 65 flows through the center opening 12 and through either the left or the right side openings 13, 13 into the combustion chamber 7. So doing creates a weak swirl inside the foregoing combustion chamber 7 to promote combustion.

During high-speed, high-load operations, a large amount of fuel 44 is supplied to the combustion chamber 7, and the average air/fuel ratio value is lower. In this case, it is desirable to make the air/fuel ratio throughout the combustion chamber 7 to be more uniform, in order to speed combustion as required for high-speed, high-load operations.

Then, during such high-speed, high-load operations, the supply of air 55 from the air supply means 58 is halted and by so doing, as described above, the fuel 44 injected by the fuel injection valve 45 enters the combustion chamber 7 through the side openings 13, 13 to be dispersed throughout the combustion chamber 7 and to accelerate combustion. Also, in this case, because the air/fuel ratio value is low, as was described above, there is more reliable ignition by the spark plug 48.

An air intake control valve 41 is closed during low-speed, low-load operations to cause the air 55 to pass between the inside surface of the air intake passage 16 and the air intake control valve 41, causing the fuel 44 that is injected to be directed toward the discharge area 47, and thereby to reliably create the desired stratification.

The passage axis 18 of the main air intake passage unit 16, along with the passage axis 21 of the branch passage 19 that connects to the center opening 12 from the foregoing main air intake passage unit 16, run approximately parallel to the imaginary straight line 11.

By so doing, when viewed along the axis 8 of the foregoing cylinder 2, the foregoing main air intake passage unit 16 is arrayed approximately in line with the branch passage 19, thereby inhibiting any disturbance to the flow of fuel through the foregoing main air intake passage unit 16 and the branch passage 19, and directs that flow toward the discharge area 47 of the spark plug 48 through the foregoing center opening 12, thereby reliably generating the desired stratification.

Accordingly, particularly during low-speed, low-load operations, a rich air/fuel mixture layer is formed near the discharge area 47 of the spark plug 48 inside the combustion chamber, thereby assuring reliable ignition.

## Claims

1. internal combustion engine having a center opening (12) into a combustion chamber (7) and side openings (13) into said combustion chamber,
an air intake passage (15) extending towards said openings (12, 13), said air intake passage (15) comprising a common main air intake passage unit (16) spaced apart from said openings (12,13), and
a fuel injection valve (45) which is mounted to inject fuel into the air intake passage (15),
**characterized in that**
air supply means (58) are provided to supply air to the air intake passage (15) to thereby direct the fuel injected by said fuel injection valve (45) towards the center opening (12) when air supply is switched on, otherwise the fuel injected is directed at least towards the side openings (13), an air intake control valve (41) is installed in the air intake passage (15) to open and close the main air intake passage unit (16) in a manner such that when the air intake control valve (41) is closed, air passes between the inside surface of the main air intake passage unit (16) and the air intake control valve (41), causing the fuel injected into the air intake passage to be directed towards the center opening (12).

2. Internal combustion engine according to claim 1, **characterized in that** the air supply means (58) comprises an air nozzle (60) near a nozzle (46) of the fuel injection valve (45).

3. Internal combustion engine according to claim 2, **characterized in that** the air supply means (58) further comprises an air passage (61) connecting said air nozzle (60) with a portion of the air intake passage (15) upstream a throttle valve (40), said throttle valve (40) being disposed upstream said air intake control valve (41).

4. Internal combustion engine according to claim 3, **characterized in that** the air passage (61) is opened and closed by a valve (62).

5. Internal combustion engine according to one of claims 1 to 4, **characterized in that** the air intake passage (15) further comprises three branch passages (19, 20) diverging from said main air intake passage unit (16), each passage extending towards and passing into one opening (12, 13), respectively.

6. Internal combustion engine according to one of claims 1 to 5, **characterized in that** the air intake passage (15) is symmetrical with respect to an imaginary straight line (11) pointing to the center opening (12) and passing through the axis of a cylinder.

7. Internal combustion engine according to claim 6, **characterized in that** the passage axis of the branch passage (19) that is directed towards the center opening (12) is substantially parallel to said imaginary straight line (11).

8. internal combustion engine according to one of claims 1 to 7, **characterized in that** a gap (65) is formed at an outside perimeter area of the air intake control valve (41) on the air intake passage axis (18).

9. Internal combustion engine according to one of claims 1 to 8, **characterized in that** a spark plug (48) is mounted with its discharge area at an edge of the combustion chamber (7) in close proximity to the axis (8) of the cylinder.

## Patentansprüche

1. Verbrennungskraftmaschine mit einer Zentralöffnung (12) in eine Brennkammer (7) und Seitenöffnungen (13) in die Brennkammer,
einem Lufteinlaßkanal (15), der sich in Richtung der Öffnungen (12, 13) erstreckt, wobei der Lufteinlaßkanal (15) eine gemeinsame Hauptlufteinlaßkanaleinheit (16) umfaßt, die von den Öffnungen (12, 13) beabstandet angeordnet ist, und
einem Kraftstoffeinspritzventil (45), das derart angebracht ist, um Kraftstoff in den Lufteinlaßkanal (15) einzuspritzen, **dadurch gekennzeichnet**, daß
Luftzufuhrmittel (58) vorgesehen sind, um dem Lufteinlaßkanal (15) Luft zuzuführen, um dadurch den durch das Kraftstoffeinspritzventil (45) eingespritzten Kraftstoff in Richtung der Zentralöffnung (12) zu lenken, wenn die Luftzufuhr eingeschaltet ist, andernfalls wird der eingespritzte Kraftstoff zumindest in Richtung der Seitenöffnungen (13) gerichtet,
ein Lufteinlaßsteuerventil (41), in dem Lufteinlaßkanal (15) angeordnet ist, um die Hauptlufteinlaßkanaleinheit (16) zu öffnen und zu schließen derart, daß bei verschlossenem Lufteinlaßsteuerventil (41) die Luft zwischen der Innenfläche der Hauptlufteinlaßkanaleinheit (16) und dem Lufteinlaßsteuerventil (41) hindurchtritt, wodurch der in den Lufteinlaßkanal eingespritzte Kraftstoff in Richtung der Zentralöffnung (12) gerichtet wird.

2. Verbrennungskraftmaschine nach Anspruch 1, **dadurch gekennzeichnet**, daß die Luftzufuhrmittel (58) eine Luftdüse (60) nahe einer Düse (46) des Kraftstoffeinspritzventils (45) umfassen.

3. Verbrennungskraftmaschine nach Anspruch 2, **dadurch gekennzeichnet**, daß die Luftzufuhrmittel (58) eine Luftleitung (61) umfassen, die die Luftdüse (60) mit einem Abschnitt des Lufteinlaßkanals (15) oberhalb eines Drosselventils (40) verbindet, wobei das Drosselventil (40) stromauf des Lufteinlaßsteuerventils (41) angeordnet ist.

4. Verbrennungskraftmaschine nach Anspruch 3, **dadurch gekennzeichnet**, daß die Luftleitung (61) durch ein Ventil (62) geöffnet und geschlossen wird.

5. Verbrennungskraftmaschine nach einem der Ansprüche 1 bis 4, **dadurch gekennzeichnet**, daß der Lufteinlaßkanal weiterhin drei Zweigkanäle (19, 20) umfaßt, die von der Hauptlufteinlaßkanaleinheit (16) verzweigen, wobei jeder Zweig sich jeweils zu einer Öffnung (12, 13) erstreckt und dort hineinverläuft.

6. Verbrennungskraftmaschine nach einem der Ansprüche 1 bis 5, **dadurch gekennzeichnet**, daß der Lufteinlaßkanal (15) symmetrisch zu einer imaginären, geraden Linie (11) ist, die auf die Zentralöffnung (12) zeigt und durch die Achse eines Zylinders verläuft.

7. Verbrennungskraftmaschine nach Anspruch 6, **dadurch gekennzeichnet**, daß die Zweigachse des Zweigkanals (19), der in Richtung der Zentralöffnung (12) gerichtet ist, im wesentlichen parallel zu der imaginären, geraden Linie (11) ist.

8. Verbrennungskraftmaschine nach einem der Ansprüche 1 bis 7, **dadurch gekennzeichnet,** daß eine Lücke (65) an einem außenseitigen Umfangsbereich des Lufteinlaßsteuerventils (41) auf der Lufteinlaßkanalachse (18) ausgebildet ist.

9. Verbrennungskraftmaschine nach einem der Ansprüche 1 bis 8, **dadurch gekennzeichnet,** daß eine Zündkerze (48) mit ihrem Entladungsbereich an einem Rand der Brennkammer (7) in der Nähe der Achse (8) des Zylinders angebracht ist.

## Revendications

1. Moteur à combustion interne ayant une ouverture centrale (12) dans une chambre de combustion (7) et des ouvertures latérales (13) dans ladite chambre de combustion,
un passage d'admission d'air (15) s'étendant vers lesdites ouvertures (12, 13) ledit passage d'admission d'air (15) comprenant une unité de passage d'admission d'air (16) principale commune, espacée desdites ouvertures (12, 13), et
une soupape d'injection de carburant (45) qui est montée de façon à injecter du carburant dans le passage d'admission d'air (15),
caractérisé en ce que
des moyens d'amenée d'air (58) sont prévus pour amener de l'air au passage d'admission d'air (15) pour orienter de ce fait le carburant injecté par ladite soupape d'injection de carburant (45) vers l'ouverture centrale (12), lorsqu'une amenée d'air est mise en service, autrement le carburant injecté est orienté au moins vers les ouvertures latérales (13) une soupape de commande d'admission d'air (41) est installée dans le passage d'admission d'air (15) pour ouvrir et fermer l'unité de passage d'admission d'air (16) principale de manière que, lorsque la soupape de commande d'admission d'air (41) est fermée, de l'air passe entre la surface intérieure de l'unité de passage d'admission (16) principale et la soupape de commande d'admission d'air (41), forçant le carburant injecté dans le passage d'admission d'air à être orienté vers l'ouverture centrale (12).

2. Moteur à combustion interne selon la revendication 1, caractérisé en ce que les moyens d'amenée d'air (58) comprennent une buse d'air (60) située près d'une buse (46) montée près de la soupape d'injection de carburant (45).

3. Moteur à combustion interne selon la revendication 2, caractérisé en ce que les moyens d'amenée d'air (58) comprennent en outre un passage d'air (61) reliant ladite buse d'air (60) à une partie du passage d'admission d'air (15) en amont d'une soupape d'étranglement (40), ladite soupape d'étranglement (40) étant disposée en amont de ladite soupape de commande d'admission d'air (41).

4. Moteur à combustion interne selon la revendication 3, caractérisé en ce que le passage d'air (61) est ouvert et fermé par une soupape (62).

5. Moteur à combustion interne selon l'une des revendications 1 à 4, caractérisé en ce que le passage d'admission (15) comprend en outre trois passages de ramification (19, 20) divergeant de ladite unité de passage d'admission d'air (16) principale, chaque passage s'étendant vers et passant dans une ouverture (12, 13), respectivement.

6. Moteur à combustion interne selon l'une des revendications 1 à 5, caractérisé en ce que le passage d'admission d'air (15) est symétrique par rapport à une ligne droite imaginaire (11) orientée vers l'ouverture centrale (12) et passant par l'axe d'un cylindre.

7. Moteur à combustion interne selon la revendication 6, caractérisé en ce que l'axe de passage du passage de ramification (19) qui est orienté vers l'ouverture centrale (12) est sensiblement parallèle à ladite ligne droite imaginaire (11).

8. Moteur à combustion interne selon l'une des revendications 1 à 7, caractérisé en ce qu'un jeu (65) est formé sur une zone périphérique extérieure de la soupape de commande d'admission d'air (41) sur l'axe de passage d'admission (18).

9. Moteur à combustion interne selon l'une des revendications 1 à 8, caractérisé en ce qu'une bougie d'allumage (48) est montée avec sa zone d'évacuation sur un bord de la chambre de combustion (7) à proximité immédiate de l'axe (8) du cylindre.
